# DEMANDE DE BREVET EUROPEEN

(11) **EP 0 851 250 A1**
(43) Date de publication de la demande: **01.07.1998**
(21) Numéro de dépôt: 97403180.9
(22) Date de dépôt: 30.12.1997
(51) Int. Cl.: G02B 6/255

(54) **Module d'epissure pour fibres optiques**

(30) Priorité: 30.12.1996 FR 9616189
(71) Demandeur: ALCATEL ALSTHOM COMPAGNIE GENERALE D'ELECTRICITE, 75008 Paris (FR)
(72) Inventeur: Vincent, Alain, 77230 Juilly (FR); Reslinger, Michel, 91070 Bondoufle (FR); Gofard, Gérard, 94880 Noiseau (FR); Laurency, Philippe, 92700 Colombes (FR)
(74) Mandataire: Buffière, Michelle

(57) **Abrégé**

Le module d'épissure pour fibres optiques comporte un boîtier récepteur (1) doté d'une cavité longitudinale (4) débouchante par deux orifices d'insertion (5,5') de fibre à travers deux parois d'extrémité du boîtier, un élément immobilisateur de fibres (21) et des moyens presseurs (31) logés dans la cavité et un capot de fermeture (7) encliquetable sur le boîtier.

L'élément immobilisateur de fibres (2) obture sensiblement la cavité et porte lesdits moyens presseurs (3) ainsi reçus face à une rainure (4) prévue dans le fond de la cavité et située dans le prolongement desdits orifices. Des moyens d'encliquetage du capot sur le boîtier définissent deux positions dudit élément dans la cavité, pour le passage des fibres et leur immobilation dans la rainure.

En effet dans la réalisation présentée, les extrémités longitudinales du capot (7) comportent des pattes d'encliquetage dotées de crans (10,10') respectivement destinés à coopérer avec les crans (6,6') que le boîtier récepteur (1) comporte.

Les crans (10,10') orientés intérieurement sont donc eux aussi décalés d'une part sur deux niveaux en hauteur, d'autre part en largeur et les crans (10') qui sont les plus éloignés de la partie supérieure du capot (7) sont aussi plus larges que les crans (10), les uns et les autres ayant au moins approximativement même largeur que les crans (6) ou (6') avec lesquels ils sont susceptibles d'être respectivement amenés à coopérer.

## Description

L'invention concerne un module d'épissure optique destiné à assurer un raccordement bout à bout de deux fibres optiques et notamment un module conçu pour être mis en oeuvre avec un outil de raccordement apte à assurer au moins une partie des opérations nécessaires au raccordement.

Comme il est connu le raccordement en bout de deux fibres optiques implique la réalisation d'opérations délicates comprenant en particulier une mise en forme de l'extrémité concernée de chaque fibre, un positionnement précis des extrémités à raccorder pour assurer une continuité optique de qualité et une immobilisation des fibres l'une par rapport à l'autre après un positionnement adéquat.

Le document US-A-5159653 décrit un module métallique qui permet de raccorder de fibres bout à bout dans un boîtier récepteur comportant une cavité longitudinale au fond de laquelle ces fibres pénètrent chacune par un orifice différent traversant une paroi d'extrémité du boîtier. Un élément immobilisateur de fibres vient se loger dans la cavité sous un couvercle qui se fixe à l'intérieur de cette cavité et qui participe à l'immobilisation des fibres en assurant leur coincement entre deux parties repliables l'une vers l'autre dans une rainure située au niveau de la pliure où s'unissent ces deux parties d'élément immobilisateur.

L'invention propose un module d'épissure permettant un raccordement bout à bout de deux fibres optiques qui est plus particulièrement conçu pour pouvoir être mis en oeuvre avec un outil de raccordement conçu lui-même pour permettre la réalisation de la suite d'opérations nécessaires au raccordement et en particulier l'insertion des fibres dans le module et leur immobilisation après mise bout à bout.

Elle a pour objet un module d'épissure, comportant un boîtier récepteur doté d'une part d'une cavité longitudinale débouchante par deux orifices d'insertion de fibre à travers deux parois opposées d'extrémité et d'autre part d'une rainure longitudinale dans le fond de la cavité du boîtier, un élément immobilisateur venant se loger dans la cavité, des moyens presseurs reçus dans ladite cavité pour appliquer une pression de maintien sur les portions des fibres introduites dans la cavité par lesdits orifices, un capot de fermeture de ladite cavité, et des moyens complémentaires de fixation par encliquetage prévus sur ledit boîtier et ledit capot, caractérisé en ce que ledit élément immobilisateur porte lesdits moyens presseurs ainsi reçus dans ladite cavité face à ladite rainure et obture sensiblement ainsi ladite cavité, en ce que lesdits orifices débouchent directement dans ladite rainure pour la réception bout à bout des fibres dans celle-ci, et en ce que lesdits moyens complémentaires de fixation sont agencés pour le maintien dudit élément immobilisateur soit dans une première position, pour laquelle un passage de fibre est laissé entre les moyens presseurs et ladite rainure, soit dans une seconde position pour laquelle les moyens presseurs sont poussés en fond de cavité pour immobiliser les fibres présentes dans ladite rainure.

Avantageusement en outre :
- Les moyens presseurs ont une forme sensiblement complémentaire de celle de la cavité et présentent une ouverture longitudinale de répartition de pression le long de ladite rainure.
- Ledit élément immobilisateur, lesdits moyens presseurs et ledit capot forment un ensemble d'une seule pièce en matière plastique, comportant un pilier médian reliant ledit capot auxdits moyens presseurs.
- Lesdits moyens de fixation prévus sur au moins l'un desdits boîtier et capot sont répartis sur deux niveaux de hauteur pour définir lesdites première et deuxième positions dudit élément immobilisateur.

L'invention, ses caractéristiques et ses avantages sont précisés dans la description qui suit en liaison avec les figures évoquées ci-dessous.

La figure 1 présente une vue de face d'un module monté.

Les figures 2 à 5 présentent respectivement une vue de face en coupe, une vue de droite, une vue de gauche en coupe et une vue de dessus d'un boîtier récepteur d'un module d'épissure selon l'invention. Les figures 6 à 9 présentent respectivement une vue de dessous, une vue de face en coupe, une vue de droite en coupe et une vue de gauche d'un élément immobilisateur d'un module d'épissure selon l'invention.

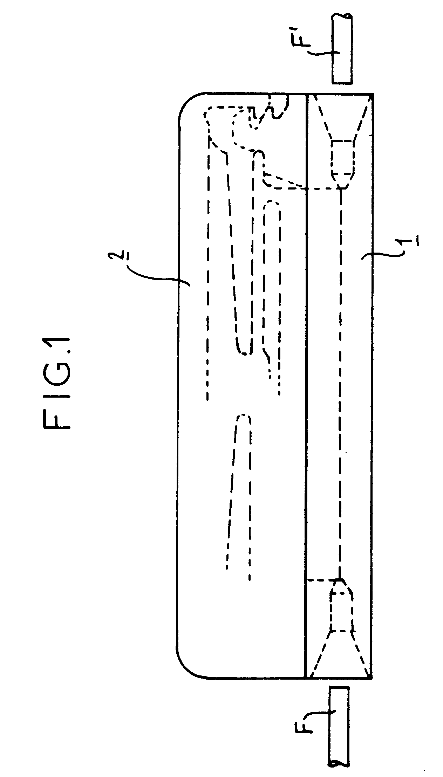

Comme indiqué plus haut et comme montré sur la figure 1, le module d'épissure selon l'invention est destiné à permettre le raccordement bout à bout de deux fibres optiques. Il comporte à cet effet un boîtier récepteur 1 destiné à recevoir deux fibres F, F' et un élément immobilisateur 2 destiné à coopérer avec le boîtier récepteur 1 pour assurer le maintien en position de ces deux fibres optiques après qu'elles aient été positionnées bout à bout dans le boîtier, de manière à assurer une continuité optique satisfaisante entre elles, selon des dispositions connues en la matière.

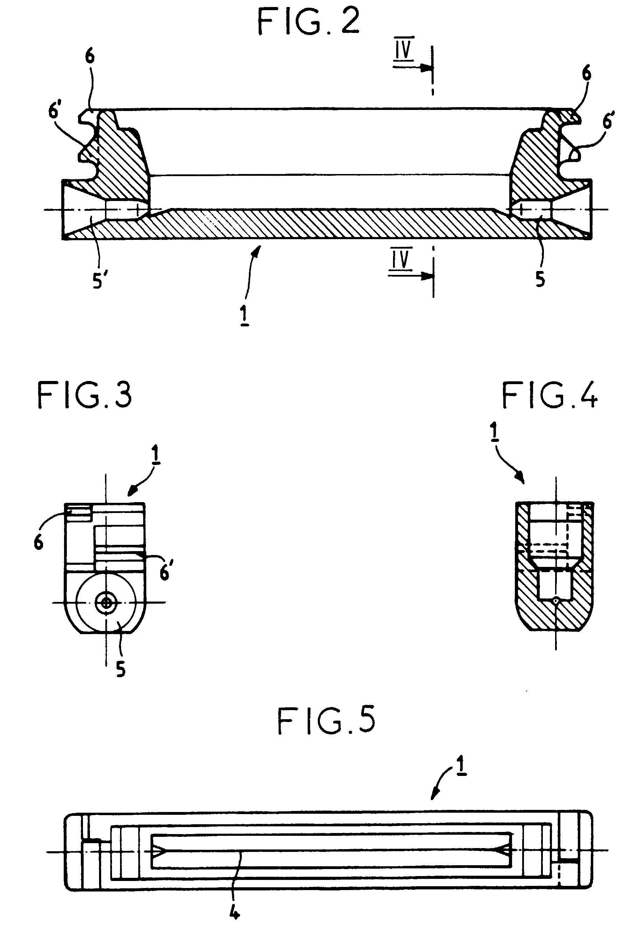

Le boîtier récepteur 1 se présente sous la forme d'un boîtier en matériau moulé, par exemple en une résine thermoplastique, il est ici d'allure parallèlépipédique rectangle et il comporte une cavité longitudinale débouchante ouverte au niveau de l'une de ses grandes faces pour recevoir une partie 3 d'élément immobilisateur 2, ainsi qu'on le voit sur les figures 2, 3 et 4.

Le fond de la cavité que comporte le boîtier récepteur 1 est doté d'une rainure centrale 4 longitudinale destinée à recevoir deux fibres à raccorder en bout prévues pour pénétrer dans cette cavité par des orifices 5 disposés dans des parois latérales opposées du boîtier au niveau du fond de la cavité et chacun à une des extrémités de la rainure 4.

Chaque orifice 5, de part sa forme même, ou éventuellement de part la forme d'un embout qu'il reçoit, s'évase vers l'extérieur du boîtier pour favoriser l'entrée d'une fibre et il se poursuit par une partie de centrage où cette orifice a un diamètre déterminé dans le prolongement de l'évasement et vers l'intérieur de la cavité. Cette partie est destinée à centrer l'extrémité à raccorder d'une fibre de diamètre donné, le diamètre des orifices ou des embouts qu'ils contiennent éventuellement étant choisis en fonction de ceux des fibres à raccorder. Ces dernières sont prévues pour venir en butée l'une contre l'autre dans la partie médiane de la rainure longitudinale 4.

Le boîtier récepteur 1 comporte par ailleurs des moyens destinés à permettre à l'élément immobilisateur 2 de venir se fixer d'une part en une première position laissant une possibilité de libre passage aux fibres dans la rainure 4 entre le fond de cette rainure et l'élément immobilisateur 2, d'autre part dans une seconde position pour laquelle l'élément immobilisateur presse en fond de rainure 4 toute portion de fibre insérée entre cette rainure et lui-même.

Ces moyens sont ici transversalement disposés aux extrémités du boîtier à l'extérieur de ce dernier et ils sont constitués sous la forme de crans en saillie 6, 6' qui sont décalés d'une part en hauteur, d'autre part en largeur dans la réalisation présentée. Les crans 6 situés de part et d'autre du boîtier et à la même hauteur sont destinés à permettre un assujettissement de l'élément immobilisateur sur le boîtier récepteur dans la première des positions évoquées ci-dessus. Les crans 6' situés à un niveau plus bas que les crans 6 sont destinés à permettre le maintien de l'élément immobilisateur par rapport à le boîtier récepteur dans la seconde des positions.

Dans la réalisation présentée, chaque cran 6 est plus étroit que le cran 6' au-dessus duquel il est situé et par rapport auquel il est latéralement décalé, ainsi qu'on le voit sur les figures 2 et 3. L'élément immobilisateur 2 est par exemple réalisé dans le même matériau que le boîtier récepteur 1, il comporte une partie 3 qui est ici destinée à être exploitée pour appliquer une pression de maintien en position sur les portions de fibre insérées via les orifices 5 entre la rainure 4 d'un boîtier récepteur 1 et elle-même, à partir du moment où l'élément immobilisateur 2 qui la comporte est poussé dans la seconde des positions mentionnées plus haut par rapport à le boîtier récepteur 1 sur lequel il est positionné.

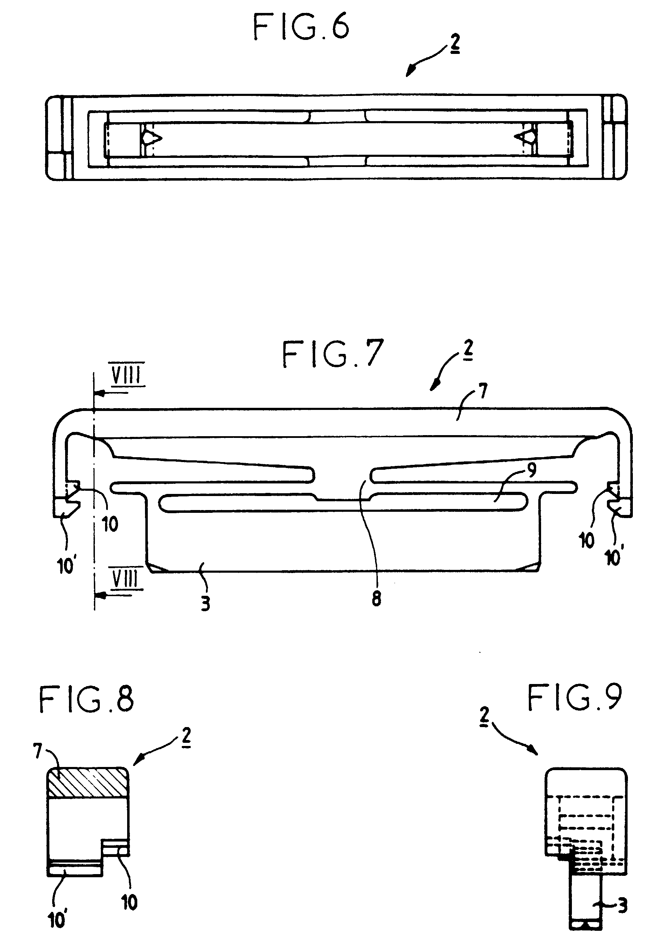

Dans la réalisation présentée et comme montré sur les figures 7, 8, 9, la partie pressante 3 à une forme qui est complémentaire de celle de la cavité du boîtier récepteur 1 qui la reçoit, soit ici une allure parallèlépipédique rectangle. Elle est fixée à un capot 7 qui vient fermer la cavité de le boîtier récepteur 1 qu'il obture, lorsque l'élément immobilisateur 2 est en position. La liaison entre partie pressante 3 et capot 7 du même élément immobilisateur 2 est ici supposée assurée par un court pilier central 8 permettant élastiquement un jeu angulaire limité de la partie pressante par rapport au capot.

Une ouverture 9 s'étend sur la majeure partie de la longueur de la partie pressante 3, ici à proximité du pilier central 8, elle débouche latéralement de part et d'autre de cette partie pressante. Elle permet à la pression exercée par l'intermédiaire du dit pilier d'être appliquée à la partie pressante proprement dite au niveau de ses extrémités longitudinales. Une répartition optimale de pression est ainsi obtenue sur les portions de fibre immobilisées par la partie pressante au niveau de la rainure 4 dans le boîtier récepteur.

L'élément immobilisateur 2 comporte des moyens pour se fixer sur un boîtier récepteur 1 qui sont complémentaires de ceux que comporte ce dernier à cet effet et qui forment des moyens de fermeture de la cavité de ce boîtier avec le capot 7 auquel ils sont incorporés. En effet dans la réalisation présentée, les extrémités longitudinales du capot 7 comportent des pattes d'encliquetage dotées de crans 10, 10' respectivement destinés à coopérer avec les crans 6, 6' que le boîtier récepteur 1 comporte.

Les crans 10, 10' orientés intérieurement sont donc eux aussi décalés d'une part sur deux niveaux en hauteur, d'autre part en largeur et les crans 10' qui sont les plus éloignés de la partie supérieure du capot 7 sont aussi plus larges que les crans 10, les uns et les autres ayant au moins approximativement même largeur que les crans 6 ou 6' avec lesquels ils sont susceptibles d'être respectivement amenés à coopérer. Il est prévu d'effectuer directement le raccordement de deux fibres au moyen du module d'épissure décrit ci-dessus après avoir introduit chaque fibre dans l'un des orifices 5 du boîtier, après que ces fibres aient été clivées de manière déterminée à leur extrémité de raccordement.

Ceci implique un positionnement en bout réalisé d'une manière précise pour que les extrémités clivées viennent chacune dans la position prévue pour elle, avant immobilisation par action sur l'élément immobilisateur du module pour le faire passer de sa première à sa seconde position. Ce positionnement est prévu pour être essentiellement assuré par la partie de centrage de chaque orifice, par la rainure 4 qui est située dans le prolongement des parties de centrage des deux orifices dans le boîtier récepteur et par la course en translation autorisée aux moyens de l'outil, non représentés, qui introduisent les fibres dans les orifices du boîtier récepteur dans une forme préférée de mise en oeuvre du module.

Le module selon l'invention est prévu pour permettre le positionnement des fibres dans un boîtier récepteur 1 dont l'élément immobilisateur 2 est dans la première des positions prévues pour lui où il existe une possibilité de passage, pour chacune des deux fibres à raccorder, entre les moyens presseurs 3 de l'élément et le fond de la cavité du boîtier.

En raison de la disposition des éléments encliquetables du capot et des moyens complémentaires que le boîtier récepteur comporte, il est prévu de réaliser le passage de l'élément immobilisateur de la première position à la seconde position pour laquelle les moyens presseurs sont poussés en fond de cavité, aussitôt après que les fibres aient été mises bout à bout. Cette mise bout à bout s'effectue préférablement par pénétration simultanée des extrémités des fibres dans une goutte de liquide d'adaptation d'indice préalablement placée sur le fond au centre du boîtier avant mise en place du capot et introduction des fibres.

Le passage de l'élément immobilisateur d'une position à l'autre est prévu pour être effectué par simple enfoncement de cet élément dans la cavité du boîtier, cet enfoncement étant préférablement réalisé à l'aide d'un outil de raccordement où le boîtier est maintenu fixe dans une position pour laquelle le fond du boîtier est horizontal ou quasi-horizontal et où l'élément immobilisateur est pressé verticalement ou quasi-verticalement par des moyens comportés par l'outil. Ces moyens sont par exemple de type vérin mécanique et viennent appuyer sur le capot de manière à entraîner un encliquetage simultané des pattes porteuses de crans 10' situées de part et d'autre du capot sur les crans complémentaires 6' du boîtier en fin d'appui. Dans une forme préférée de réalisation d'outil de raccordement la pression d'enfoncement du capot est assurée par deux poussoirs simultanément commandés qui viennent en appui chacun au niveau d'une des extrémités du capot.

L'élément immobilisateur 2 assure alors le maintien en place par pression des extrémités des fibres introduites dans la cavité du boîtier 1. Il est alors possible de retirer de l'outil pour utilisation le module raccordé aux deux fibres qui y ont été introduites.

## Revendications

1. Module d'épissure destiné à permettre le raccordement bout à bout de deux fibres optiques, comportant un boîtier récepteur (1) doté d'une part d'une cavité longitudinale débouchante par deux orifices (5) d'insertion de fibre à travers deux parois opposées d'extrémité et d'autre part d'une rainure longitudinale (4) dans le fond de la cavité du boîtier, un élément immobilisateur (2) venant se loger dans la cavité, des moyens presseurs (3) reçus dans ladite cavité pour appliquer une pression de maintien sur les portions des fibres introduites dans la cavité par lesdits orifices, un capot (7) de fermeture de ladite cavité, et des moyens complémentaires de fixation par encliquetage (6, 6', 10, 10') prévus sur ledit boîtier et ledit capot, caractérisé en ce que ledit élément immobilisateur (2) porte lesdits moyens presseurs ainsi reçus dans ladite cavité face à ladite rainure (4) et obture sensiblement ainsi ladite cavité, en ce que lesdits orifices (5) débouchent directement dans ladite rainure (4) pour la réception bout à bout des fibres dans celle-ci, et en ce que lesdits moyens complémentaires de fixation (6, 6', 10, 10') sont agencés pour le maintien dudit élément immobilisateur soit dans une première position, pour laquelle un passage de fibre est laissé entre les moyens presseurs (3) et ladite rainure (4), soit dans une seconde position pour laquelle les moyens presseurs (3) sont poussés en fond de cavité pour immobiliser les fibres présentes dans ladite rainure.

2. Module d'épissure, selon la revendication 1, caractérisé en ce que lesdits moyens presseurs (3) ont une forme sensiblement complémentaire de celle de la cavité et présentent une ouverture longitudinale (9) de répartition de pression le long de ladite rainure.

3. Module d'épissure, selon la revendication 2, caractérisé en ce que ledit élément immobilisateur (2), lesdits moyens presseurs (3) et ledit capot (7) forment un ensemble d'une seule pièce en matière plastique, comportant un pilier médian (8) reliant ledit capot auxdits moyens presseurs.

4. Module d'épissure, selon l'une des revendications 1 à 3, caractérisé en ce que lesdits moyens de fixation (6, 6', 10, 10') prévus sur au moins l'un desdits boîtier et capot sont répartis sur deux niveaux de hauteur pour définir lesdites première et deuxième positions dudit élément immobilisateur.

5. Module d'épissure, selon la revendication 4, caractérisé en ce que lesdits moyens de fixation prévus sur ledit boîtier et ledit capot sont répartis sur deux niveaux de hauteur sur chacun d'eux et sont réalisés par des crans de largeur différente selon le niveau, les crans (6', 10') correspondant au positionnement de l'élément immobilisateur dans ladite seconde position étant plus larges que ceux (6, 10) qui correspondent au positionnement de l'élément immobilisateur dans ladite première position.

6. Module d'épissure selon l'une des revendications 1 à 5, caractérisé en ce que lesdits moyens de fixation (6, 6') prévus sur ledit boîtier sont portés par les deux parois opposées munies desdits orifices d'insertion de fibre et sont extérieurs sur celles-ci.
